# EUROPEAN PATENT APPLICATION

(11) **EP 2 465 911 A1**
(43) Date of publication of application: **20.06.2012**
(21) Application number: 12159960.9
(22) Date of filing: 16.10.2009
(51) Int. Cl.: C09K 8/536, C09K 8/60, C09K 8/70, C09K 8/74, C09K 8/92

(54) **Method for intervention operations in subsurface hydrocarbon formations**

(30) Priority: 17.10.2008 US 196507 P
(62) Divisional of application: 09744266.9
(71) Applicant: FTS International Services, LLC, Forth Worth TX 76102 (US); Illinois Institute Of Technology, Chicago, IL 60616 (US)
(72) Inventor: Halcomb, David L, Golden, CO Colorado 80403 (US); Wasan, Darsh T, Darien, IL Illinois 60561 (US); Nikolov, Alex D, Chicago, IL Illinois 60605 (US)
(74) Representative: Gray, James

(57) **Abstract**

Methods are provided for improved intervention processes in a well. Nanoparticles are added to a fluid containing a wetting agent to enhance wetting of solid surfaces in and around the well, leading to improved flow capacity of the well.

## Description

This application claims the benefit of Provisional Application S.N. 61/196,507, filed October 17, 2008.

### BACKGROUND OF INVENTION

### 1. FIELD OF THE INVENTION

This disclosure relates to methods for improving intervention operations in a subterranean formation containing hydrocarbons and improving recovery of hydrocarbons from a subterranean formation. More particularly, a mixture of nanoparticles and a wetting agent for modifying solid surfaces is added to an aqueous or hydrocarbon fluid and injected into a well.

### 2. Description of Related Art

Intervention operations in the petroleum production business include processes and compositions to remove unwanted deposits from a wellbore and stimulate recovery rate of hydrocarbons from geological formations. Processes to stimulate recovery rate include hydraulic fracturing, acidizing and injection of surfactant compositions.

U.S. Pat. No. 7,380,606 discloses a well treatment fluid that is a microemulsion formed by combining a solvent-surfactant blend with a carrier fluid. In preferred embodiments, the solvent-surfactant blend includes a solvent selected from the group consisting of terpenes and alkyl or aryl esters of short-chain alcohols. A preferred terpene is d-limonene. The blends may be added to water- or oil-based carrier fluids to provide a method for treating an oil or gas well.

U.S. App. 2008/0194430 discloses use of nanoparticles in a well treatment fluid consisting of a gelling agent.

Scientific papers have been published showing the effects of nanoparticles in a fluid on that fluid's spreading dynamics under an air bubble or oil drop. For example, "Spreading of nanofluids on solids," by D.T. Wasan and A.D. Nikolov, Nature 423, May 8, 2003, p. 156, illustrates with photographs the mechanism for enhanced nanofluid spreading by nanoparticles and provides calculations of increased structural disjoining pressure of a film containing nanoparticles. Various scientific papers have been published showing the mechanisms of spreading of nanofluid or micellar solutions, including "New Paradigms for Spreading of Colloidal Fluids on Solid Surfaces," by A.V. Chengara, A.D. Nikolov and D.T. Wasan, Adv. Polym Sci (2008) 218: 117-141.

Existing aqueous- or hydrocarbon-based intervention fluids and treatments rely on conventional surface energy effects, such as surface tension, interfacial tension, capillary pressure reduction, solvency, and a mechanical fracturing mechanism. However, there is a continued need for more effective methods and processes for improved well stimulation, completion, remediation, and recovery. In particular, there is a need for treatment fluids that provide improved wetting of the surfaces of subsurface rocks by aqueous fluids (or that increase the "disjoining pressure" of the fluids) so as to allow greater flow of hydrocarbons or treatment fluids from subsurface formations. There is also a need for recovery fluids that provide improved wetting of the surfaces of subsurface rocks, so as to allow greater recovery of hydrocarbons or treatment fluids from subsurface formations.

### 3. BRIEF SUMMARY OF THE INVENTION

Composition and method are provided for treating wellbores and oil and gas reservoirs so as to enhance flowback of treatment fluids and removal of wellbore damage caused by paraffin, asphaltenes, heavy crude, waterblock or other materials.

### 4. BRIEF DESCRIPTION OF THE SEVERAL VIEWS OF THE DRAWINGS

FIG. 1 illustrates the mechanism of crude oil displacement from solid in the presence of nanofluid and wetting agent. FIG. 1a shows the location of the wedge film and contact angle region. FIG. 1b shows details of the wedge film with the structured nanoparticles and wetting agent.
FIG.2 illustrates the apparatus used for observing displacement of crude oil from a simulated 2-D pore of a rock. FIG. 2a shows an isometric front view of two spaced-apart glass slides in a cuvette. FIG. 2b shows a side view with a camera used to record displacement of oil by aqueous solutions.
FIG. 3 shows results of crude oil removal from a simulated 2-D pore by aqueous nanofluid test solutions.

### DETAILED DESCRIPTION OF THE INVENTION

U.S. Provisional App. No. S.N. 61/196,507 is hereby incorporated by reference in its entirety.

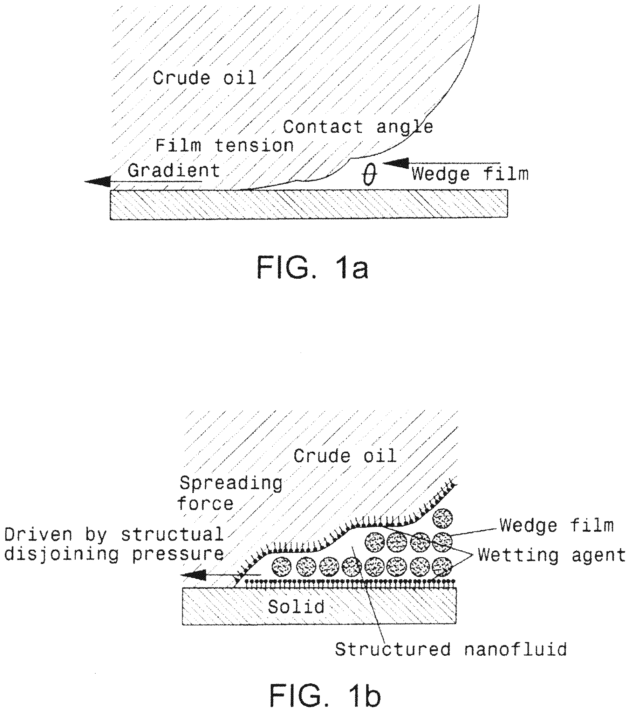

The present invention utilizes the incorporation of colloidal particles (nanoparticles) selected from the group consisting of silicon dioxide, zirconium dioxide, antimony dioxide, and combinations thereof into the intervention fluid injected into the subterranean hydrocarbon formation, reservoir or well bore. The particles range in size from approximately 1 to 100 nanometers (nm). It is demonstrated that the incorporation of the nanoparticle compositions into the intervention fluid allows the fluids to function more effectively by enabling the mechanism of structural disjoining pressure to be exerted in addition to all of the mechanisms noted previously, thus improving the results over the intervention performance of existing fluid types. FIG. 1a illustrates crude oil on a solid surface, which may be the surface of a rock grain in a hydrocarbon reservoir. A water-oil contact angle, θ, exists at the points of contact of the two liquids and the solid. A film tension gradient or the spreading force promoted by the structural disjoining pressure (the structured nanofluid into wedge film) for displacement of the oil from the solid surface is illustrated. Nanoparticles tend to structure into the wedge film between the oil and solid, indicated by an arrow. FIG. 1b shows details of nanoparticles in the wedge, with adsorbed wetting agent molecules indicated at the water/solid and water/oil interfaces. The scientific papers cited below explain the basis for increased wetting when nanoparticles are present.

The nanoparticles in the presence of the wetting agent at concentration much below the critical micelle concentration (CMC) in aqueous or hydrocarbon are the carrier fluids. A range of wetting agents may be employed and may be selected from the group consisting of ethoxylated nonyl phenol, sodium stearate, sodium dodecyl sulfate, sodium dodecylbenzene sulfonate, lauralamine hydrochloride, trimethyl dodecylammonium chloride, cetyl trimethylammonium chloride, polyoxyethylene alcohol, alkyphenolethoxylate, Polysorbate 80, propylene oxide modified polymethylsiloxane, dodecyl betaine, lauramidopropyl betaine, cocoamido-2-hydroxypropyl sulfobetaine, alkyl aryl sulfonate, fluorosurfactants and perfluoropolymers and terpolymers, and castor bean adducts.

The use of a variety of nanoparticles dispersed in water, oil or other solvent bases provides a mechanism to enable a lifting force or structural disjoining pressure to improve well intervention results arising from poor or incomplete fluid recovery from the hydrocarbon formation, reservoir or well bore after any well intervention procedure is performed. These interventions include, but are not limited to, drilling, cementing, enhanced oil recovery, water flooding, stimulation, completion or remediation. Such nanoparticle dispersions may be mixed into any well intervention fluid to improve removal efficiency.

Further, the nanoparticle dispersions may be placed onto the solid materials used for well interventions, including, but not limited to, materials used as propping agents or scouring agents within the oil and/or gas formation during well intervention procedures. The nanoparticle dispersions of the present invention also may be utilized with water pumped into a water flood injection well to facilitate improved oil and gas recovery.

Nanoparticles in the range of 1 - 50 nanometers may be mixed with carbon dioxide, nitrogen or like suitable gases to form intervention fluids. These gases, carbon dioxide (CO₂) and/or nitrogen (N₂) may be mixed with water containing various concentrations (0.1 - 20.0% by volume) surfactants described above and nanoparticles including a wetting agent in the size range of 5 - 50 nanometers at a concentration of 0.1 - 3.0% by weight in aqueous based fluids, such as water or mineral acids, to form a foamed or non-foamed intervention fluid for enhanced/improved oil recovery, water flooding, stimulations (acidizing and fracturing), remediation (damage removal), completion, cementing or drilling in oil and gas reservoirs.

Improved recovery of oil, gas, and water from a hydrocarbon producing reservoir or well may be achieved by adding colloidal/nanoparticle dispersions at concentrations between approx. 0.1% and approx. 20.0% by volume to a well intervention fluid selected from the group consisting of water, oil, hydrocarbon solvents, bio-based alcohols, glycols, and glycol-ether based solvents to form a colloidal/nanoparticle (CNP) intervention fluid. This CNP intervention fluid may then be injected into the reservoir or well to be treated to interact with well bore contaminants, reservoir injection fluids, and produced fluids so as to differentiate the CNP intervention fluid from the targeted fluid. Again, it has been demonstrated that the structural disjoining pressure (respectively the film tension) gradient by the structured nanoparticles improves the intervention operation.

The present invention improves oil, gas, and water recovery when colloidal/nanoparticles ranging in size between 1 - 200 nm are added as additives in the range of approximately 0.1% to approx. 20% by volume to a wetting agent to form a colloidal/nanoparticle dispersion. The dispersion is then added at concentrations of approx. 0.05% to approx. 30% by volume to a carrier fluid selected from the group consisting of water-based and hydrocarbon-based oil well stimulation, completion, remediation and recovery fluids to form a mixed treatment fluid. This mixed treatment fluid is then injected into a reservoir or well as an improved intervention treatment fluid.

A preferred nanoparticle dispersion for the well intervention fluid is an aqueous dispersion of 8.0 to 15.0 nm silicon dioxide particles, and an anionic charged wetting agent mixed in the water carrying the nanoparticles at 0.1 - 2.0% by weight, which is an anionic member surfactant from the group described above and the aqueous dispersion is at a pH = 7.0 +/- 1.0. The percentage nanoparticles in the dispersion ranges between approximately 5% and approximately 30% by weight in the water and surfactant mixture.

The composition of a wetting agent-nanoparticle fluid for application in well intervention or recovery processes may be selected for a particular hydrocarbon reservoir by placing a drop of crude oil from that reservoir in a nanofluid (i.e., nanoparticle dispersion in a liquid) and forming a three-phase contact region between a solid and the oil-nanofluid phases. Particles inside the wedge film between the crude oil and the solid form a 2-D layered structure (caused by the entropic effect), as shown in the paper "Spreading of Nanofluids on Solids," D.T. Wasan and A.D. Nikolov, Nature 423, 156-159 (2003). Theory predicts that the pressure (i.e., the structural disjoining pressure) normal to the solid surface is higher near the tip of the wedge film, which causes the nanofluid to spread over the solid surface, detaching the oil drop from the solid surface. The magnitude of this pressure depends on the effective particle volume fraction, particle size and polydispersity, and particle charge.

The preferred nanofluid formulation comprises nanoparticles, a wetting agent (surfactant) and a solvent. The nanoparticles contribute to the structural disjoining pressure, while the wetting agent reduces the contact angle and may contribute to dispersion of the nanoparticles. In order to enhance oil and gas removal from a rock by an aqueous fluid, the nanofluid composition may be optimized using a multi-step process as follows:

First, select the nanoparticles, such as silica, polymers, metal oxides, metals and other inorganic materials, based on the reservoir characteristics. For example, for a sandstone reservoir, silica particles are preferred. Nanoparticles are preferably spherical, less polydisperse, low cost, have good suspension stability in both aqueous and non-aqueous solvents under a wide range of pH, with a charge varying from a slightly positive value to a negative value, and are commercially available.

Preferably, the nanofluid is formulated to produce a high osmotic pressure (e.g., higher than about 200 Pa for a 10 vol % nanofluid). A nanofluid with a high osmotic pressure results in a higher structural disjoining pressure. Preferably, the nanoparticles have low polydispersity in size. (High polydispersity results in a decreased value of the structural disjoining pressure.) For example, calculations indicate that a 20% polydispersity in particle size can result in a 30% decrease in the structural disjoining pressure. But, a higher volume fraction of nanofluid yields higher structural disjoining pressure. Therefore, preferably the nanofluid formulation is formulated by using nanoparticles with less than 20% polydispersity, but with a high volume fraction (for example, 30 effective volume percent or higher)

Preferably, the wetting characteristics of the solid surface are enhanced by using an appropriate amount of a wetting agent in order to maximize the role of structural force resulting from the confinement of the nanoparticles in the wedge film.

Basic principles of formulating nanofluids for improved wetting are described in scientific papers, such as: "Spreading of Nanofluids on Solids," D.T. Wasan and A.D. Nikolov, Nature 423, 156-159 (2003); "New Paradigms for Spreading of Colloidal Fluids on Solid Surfaces," Chengara, A.V., Nikolov, A.D., Wasan, D.T., Advances in Polymer Science Vol. 218, Narayanan, R. and Berg J. Eds., Springer-Verlag 117-142 (2008); and "Spreading of Nanofluids Driven by the Structural Disjoining Pressure Gradient," A. Chengara, A.D. Nikolov, D.T. Wasan, A. Trokhymchuk and D. Henderson, J. Colloid Interface Sci., 280, 192-201 (2004), which are incorporated by reference herein in their entirety for all purposes.

To apply the principles to improving an intervention process or recovery process in a hydrocarbon reservoir, the following steps can be used:
1. Use a hybrid surface force apparatus, referred to as the capillary force balance, in conjunction with reflected light interference microscopy to measure the photo current versus time interferogram of a thinning nanofluid (see, for example, Fig 5 in "Dispersion Stability Due to Structural Contributions to the Particle Interaction as Probed by Thin Liquid Film Dynamics," A.D. Nikolov and D.T. Wasan, Langmuir, 8, 2985-2994 (1992)). Count the number of stepwise thickness transitions and calculate the effective volume fraction of the dispersed nanoparticle phase (see for example Figure 6 of the paper).
2. Determine the effective nanoparticle size (i.e. with hydration layers, electrical double layers, or grafted polymers) based on the vertical distance between the thicknesses transitions (see Figure 5 of the paper). The time for the thickness transitions to occur provides information about the particle polydispersity.
3. Observe the nanoparticle dispersion stability, which may be performed using a Kossel diffraction method based on the principle of back-light scattering, to characterize the nanofluid microstructure and dispersion stability. (See "Particle Structure and Stability of Colloidal Dispersions as Probed by the Kossel Diffraction Technique," W. Xu, A.D. Nikolov, D.T., Wasan, A. Gonsalves, and R. Borwankar, J. Colloid Interface Sci. 191, 471-481 (1997). The colloidal interparticle interaction impacts the rheology of the nanofluid dispersion. The structure formation and nanofluid stability for both nano- and poly- disperse systems can be characterized using this experimental technique.
4. Determine the wettability of a solid surface representative of reservoir rock and the microscopic contact angle using combined differential and common reflected-light interferometric techniques for the simultaneous monitoring of the nanofluid film (i.e., the wedge film) - meniscus profile, the three-phase contact angle dynamics, and the wetting film thickness transitions of the nanofluid on the solid surface. The particular advantage of the differential interferometric method is the ability to measure the film thickness profile in turbid and non-transparent liquids, and in a highly curved film-meniscus surface at both smooth and rough solid surfaces (such as a sandstone). The distance between the interference patterns and their areas of interference is used to calculate the local radii of the film curvature, which in conjunction with the interfacial tension data, allows to calculation of the capillary pressure.

The osmotic pressure of the nanofluid and the film structural disjoining pressure may be predicted from the experimental measurements and published theory.

Simple laboratory tests are conducted, preferably using crude oil. A drop of crude oil is placed on a flat glass surface in air and a nanofluid is introduced, which displaces air. A three-phase contact line shrinks due to the lowering of the interfacial tension between the oil and the nanofluid, and a wedge film is formed between the oil and the glass surface. The nanofluid penetrates between the oil and the glass surface. The formation of the nanofluid film is seen as a bright region in reflected light interferometry. The nanoparticle concentration in the film increases compared to that in the bulk-meniscus. As a result of the increase in nanoparticle concentration, the disjoining pressure increases significantly at a wedge thickness corresponding to one particle diameter. As a result of the pressure increase, the oil-nanofluid interface moves forward, and the nanofluid spreads on the solid surface, detaching the oil drop. Both the role of varying pH and electrolyte (i.e. salinity) on the separation of an oil drop from the glass surface in the oil detachment process is observed by conducting a series of such experiments.

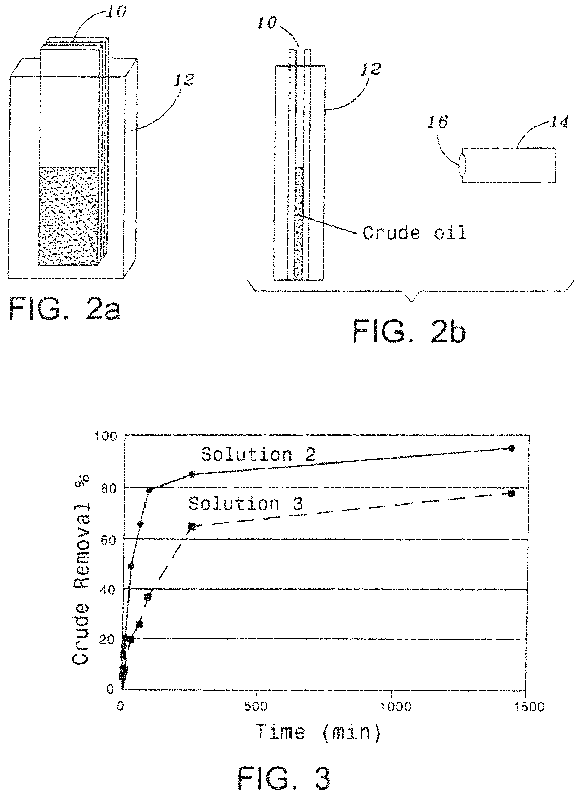

The second test method used an optical technique to monitor crude oil removal from a two-dimensional glass pore model. A schematic of the optical layout to monitor the crude oil removal from the model is shown in FIG. 2. FIG. 2a illustrates two flat, rectangular, optically smooth glass surfaces 10 that were used to form a 2-D glass pore cell (area = 2 cm²). The glass surface was cleaned with a potassium dichromate acid solution, washed with deionized water, and then dried at a room temperature of 25 °C for 24 hours. The 2-D pore was designed to mimic crude oil trapped in the reservoir, allowing for the observation of the crude oil removal dynamics. A drop of crude oil from the San Andres formation (near Goldsmith, Texas) was placed on the top of one of the glass surfaces 10. The second glass surface was placed on the top of the first. The two glass surfaces with crude between were pressed together by two magnets (not shown), forming a 2-D glass pore-filled with crude. The 2-D glass pore cell filled with crude was kept at room temperature for 24 hours. The pore gap varied from 5 to 0.5 µm, depending on the magnet's strength. In the following experiments, the gap was about 2 µm.

In some experiments, two identical 2-D glass pores filled with crude were prepared and vertically placed in a separate rectangular glass cuvette 12 containing the solution to be tested for wetting to displace oil. A side view of slides 10 in cuvette 12 is shown in FIG. 2b. Video camera 14, having lens 16, was used to record time-lapse photographs of displacement of the oil between the slides. In other experiments, a Berea sandstone piece with the shape of a parallelepiped with dimensions of 5 cm x 1 cm x 1 cm was saturated with the San Andres crude oil. The sandstone piece was placed in a vertical position in a cuvette. The sandstone was saturated with the crude oil by placing a layer of the San Andres crude at the bottom part of the cuvette and allowing capillary force to move the crude to the top of the sandstone piece. The amount of crude impregnated inside the core was estimated to be about 0.82 ml. In order for the crude to adhere to the sandstone surfaces, the piece was soaked for two days inside a closed glass vial before it was exposed to the fluid formulations described below.

Solutions to be tested for their ability to displace crude oil from the 2-D glass pores and the Berea sandstone piece were prepared. The solutions were:
Solution 1 - Surfactant solution of alpha-olefin sulfonate, ethylene glycol, isopropanol, nonyl phenol and nonionic fluorochemical surfactant, a solvent d-limonene, in a dilute solution of KCl
Solution 2 - Solution 1, plus 10% by volume silica nanoparticles having an average size of 19 nm (Nalco 1130 from Nalco Chemical).
Solution 3 - A commercially available blend of ricinoleate, d-limonene and isopropyl alcohol microemulsion in a dilute solution of KCl.

A 2-D glass pore, made up by glass slides 10, as illustrated in FIG. 2, was filled with San Andres crude oil and kept at room temperature for 24 hours in order for the crude to adhere to the glass surface. The gap between the slide surfaces of the 2-D pore was adjusted to 2± 0.5 µm. The slides were held together with magnets. The cells filled with the crude were then vertically placed in rectangular glass cuvette 12. The cuvette was filled with Solution 1 with 0.7% KCl. The crude oil removal dynamics were monitored and recorded with video camera 14, having lens 16. The efficiency of the crude oil removal from the total 2-D area after 24 hours was only about 5%. This experiment revealed that even if both the surface and interfacial tensions were reduced, Solution 1 did not perform well because the adhesion of crude oil to the glass surface was not reduced.

The same oil removal experiment was repeated, except this time Solution 2 was used with reservoir produced water and/or 2% KCl in the cuvette. After 24 hours the efficiency of crude removal from the 2-D glass pore was about 95%.

The same oil removal experiment was repeated, except this time Solution 3 was used with 0.3% KCl. Crude oil removal dynamics was observed and a video recorded. First, the crude oil trapped in the corners of the apparatus was released in the form of crude oil droplets flowing up. Then the crude trapped inside the 2-D pore began to be released. Finally, the crude at the edge of the 2-D pore was displaced. A recorded video clearly shows that more oil in the form of droplets was removed faster by the Solution 2 than by Solution 3. Results are plotted in FIG. 3. The difference in the degree of crude oil removal became more pronounced over time. Solution 2 removed more crude oil. The shape of the two curves follows a logarithmic trend. After two hours, the rate of crude removal by Solution 2 was two-times faster than that by Solution 3. After 90 minutes, Solution 2 removed 75% of the crude from the 2-D pore, while Solution 3 removed only 30% of the crude. After 24 hours, the percent of crude removal by Solution 2 was 95% while that for Solution 3 was only 78%.

A set of experiments was performed using thin specimens of Berea sandstone that were partially saturated with the crude oil by allowing crude oil to imbibe into dry specimens. The specimen was then contacted with a nanofluid inside a cuvette as described above and results were recorded by video.

The video clips show crude oil removal dynamics from Berea sandstone. The cuvette filled with Solution 3 with 0.4% KCl was milky and non-transparent, preventing observation of crude oil separation from the sandstone. However, crude oil accumulated at the air/aqueous solution surface could be observed. Crude oil removal from the rock in Solution 2 after 5, 10, and 30 minutes was video recorded. Small crude droplets (e.g. 0.008-0.015 cm) were continuously released from the pores of the sandstone and could be seen all over the core surface. As crude was released from the pores and the oil droplets reached a size at which the buoyancy force overcomes the capillary force which keeps the droplet attached to the pore, the droplets detached and rose. In order to demonstrate that the buoyancy force is responsible for the droplet detachment, the vial with the core sample was gently shaken, detaching hundreds of droplets. In some cases, twenty or more droplets were released from one pore. The process of droplet formation and release from the sandstone pore for the case of Solution 2 was recorded in a video clip. The micrograph video depicts the time frequency and the drop sizes of the crude oil droplets released from the pores. Knowing the initial amount of the crude impregnated into the sandstone sample, the number average of the pore per square centimeter, and the size of the released droplets, one can estimate the oil volume released from the core. Using this approach, one can predict the efficiency of crude removal from different rock samples and optimize the removal process. Preferably, data from several runs (e.g. four to five) would be analyzed.

After 20 hours Solution 3 became transparent and observations on crude oil droplet release from the sandstone were made, along with observations in Solution 2. The observations of crude oil removal dynamics clearly reveal that in both cases the crude oil is continuously released from the pores by droplets detaching from the pores. The droplets released from the rock in the presence of Solution 3 rose and formed a stable oil-in-water emulsion layer at the air-aqueous interface, while the droplets released from the rock's pores in the presence of Solution 2 rose to the top and formed a continuous oil layer. The amount of crude released from the rock samples was estimated by measuring the amount of the crude left inside the rock. After 24 hours' treatment, the rock samples were taken from the solution, dried at room temperature for several days until the weight became constant, and then measured. For the sample treated with Solution 2, 91 ± 5% of the crude was released and for the sample treated with Solution 3, 80 ± 5% of the crude was released. Results also showed that Solution 2 performance at a dilution ratio of 0.6 % KCL and 0.4% KCl after 24 hours was respectively 97% and 95%.

In summary, Solution 2, the nanofluid, performed substantially better than Solution 2, the microemulsion additive blend.

In a different type of experiment, 1-inch diameter and 1-inch long cores with about 20 md permeability, from a heavy oil-producing formation in Wyoming, were used to test for hydrocarbon recovery. The cores were saturated with the heavy oil--having an API gravity of 10.94. A dispersion of 44% aqueous nanofluid with 56% xylene was flowed through the first core. A nonionic surfactant/water/xylene solution was flowed through the second core. The volume of each fluid was 100 mL. Recovered oil solvated with the xylene was measured by absorbance at 410 nm wavelength using a DR5000 VIS spectrometer. The core tested with the dispersion of nanofluid and xylene recovered 89.9% more of the heavy oil than the nonionic surfactant/water/xylene solution recovered. This demonstrates the effect of the nanoparticles in increasing oil recovery.

The enhanced wetting of solids by solutions containing monodisperse nanoparticles, as provided by the phenomenon illustrated in FIG. 1, can be applied in various processes to remove solids or liquid that block flow of hydrocarbons into or out of a well. These processes have been generally identified above. Specific processes include: paraffin or heavy hydrocarbon removal, water block removal and solids removal. Other well stimulation processes are more successful if treatment fluid used in the process is more effectively removed by using the enhanced wetting provided by nanoparticles. These processes include hydraulic fracturing, both proppant and acid, and matrix acidizing, both carbonate and sandstone. Field examples of two of these processes are discussed below.

### Example 1

A well producing from the Sprayberry formation in Chaves County, New Mexico was treated with 272 gallons of surfactant and nanoparticles for paraffin remediation. The solution included 15% alpha-olefin sulfonate, ethoxylated nonyl phenol, d-limonene and 20 % by weight 11 nm nanoparticles. The production rate from the well after the treatment was increased for a total of about 90 days. Surfactant/solvent treatments in the field result in increased production for only about 30 days.

### Example 2

A well in Scurry County, Texas was treated with 150 gallons of surfactant and nanoparticles for paraffin remediation, using the solution described above. A time was allowed for the treatment solution to act. The well was then produced. The oil production rate doubled and the total fluid production rate increased from 90 to 140 barrels of fluid per day.

### Example 3

A well in Harrison County, Texas was hydraulically fractured in the Travis Peak formation. A total of 1450 gallons of wetting agent and nanoparticle solution was added to the fracturing fluid. The volume of water recovered during cleanup of the well was more than 80% of the volume of water injected during the treatment; this is significantly higher than the volume of load water typically recovered using microemulsion additives or surfactants alone in the fracturing fluid. Higher water recovery after a fracturing treatment typically results in higher hydrocarbon fluid production.

Although the present invention has been described with respect to specific details, it is not intended that such details should be regarded as limitations on the scope of the invention, except to the extent that they are included in the accompanying claims.

A method for removal of paraffin or heavy hydrocarbon deposits in or around a well so as to increase flow rate of the well comprising:
providing an aqueous fluid;
adding additives comprising nanoparticles and a wetting agent to the aqueous fluid;
injecting the aqueous fluid and additives into the well; and
producing a fluid from the well.

The method may further comprise the step of allowing a selected time for contact of the aqueous fluid in or around the well before producing the fluid from the well.

The method may further comprise adding a solvent to the aqueous fluid and additives before injecting the aqueous fluid and additives into the well.

The method described above wherein the solvent is a terpene or aromatic hydrocarbon.

The method described above wherein the terpene is d-limonene.

The method described above wherein the aromatic hydrocarbon is xylene or toluene.

The method described above wherein the wetting agent is an alpha-olefin sulfonate.

The method described above wherein the alpha-olefin sulfonate has a carbon number in the range from about 10 to about 14.

The method described above wherein the nanoparticles are added to a concentration in the range from about 5% to about 15% by weight.

A method for removal of water block around a well, comprising:
providing an aqueous fluid;
adding nanoparticles and a surfactant to the aqueous fluid;
injecting the fluid and additives into the well; and
producing a fluid from the well.

The method described above wherein the wetting agent is an alpha-olefin sulfonate.

The method described above wherein the alpha-olefin sulfonate has a carbon number in the range from about 10 to about 14.

The method described above wherein the nanoparticles are added to a concentration in the range from about 5% to about 15% by weight.

## Claims

1. A method for improving oil, gas, and water recovery from a hydrocarbon reservoir or well comprising:
injecting into the reservoir or well nanoparticles in the range of 1-100 nanometers, the particles having been combined with a wetting agent in aqueous or hydrocarbon carrier fluid.

2. The method of claim 1 wherein the wetting agent is selected from the group consisting of ethoxylated nonyl phenol, sodium stearate, sodium dodecyl sulfate, sodium dodecylbenzene sulfonate, lauralamine hydrochloride, trimethyl dodecylammonium chloride, cetyl trimethylammonium chloride, polyoxyethylene alcohol, alkyphenolethoxylate, Polysorbate 80, propylene oxide modified polymethylsiloxane, dodecyl betaine, lauramidopropyl betaine, cocoa"mido-2-hydroxy-propyl sulfobetaine, alkyl aryl sulfonate, fluorosurfactants and perfluoropolymers and terpolymers, and castor bean adducts.

3. The method of Claim 1 wherein the nanoparticles are in the range of 1-10 nanometers in size.

4. The method for claim 1 wherein the nanoparticle concentration is between 0.5 % and 20% in the aqueous or hydrocarbon carrier fluid.

5. The method of claim 1 wherein the nanoparticle concentration is in the range from approximately 0.01% to approx. 15% by volume.

6. The method of claim 5 wherein the nanoparticles are added to the carrier fluid as a dispersion at concentrations of approximately 0.1% to approximately 50 % by volume.

7. A well treatment fluid comprising;
nanoparticles in the range of approximately 1 to approximately 100 nanometer size; and
a wetting agent in an aqueous or hydrocarbon carrier fluid.

8. The treatment fluid of claim 7, wherein the wetting agent is selected from the group consisting of ethoxylated nonyl phenol, sodium stearate, sodium dodecyl sulfate, sodium dodecylbenzene sulfonate, lauralamine hydrochloride, trimethyl dodecylammonium chloride, cetyl trimethylammonium chloride, polyoxyethylene alcohol, alkyphenolethoxylate, Polysorbate 80, propylene oxide modified polymethylsiloxane, dodecyl betaine, lauramidopropyl betaine, cocoamido-2-hydroxy-propyl sulfobetaine, alkyl aryl sulfonate, fluorosurfactants and perfluoropolymers and terpolymers, and castor bean adducts.

9. The treatment fluid of Claim 7 wherein the nanoparticles are dispersed in the wetting agent and carrier fluid in the range of approximately 0.05% to approximately 30% by volume of said carrier fluid.

10. The treatment fluid of Claim 7 wherein the nanoparticles are selected from the group consisting of silicon dioxide, zirconium dioxide, antimony dioxide, and combinations thereof.

11. A method for acidizing a carbonate reservoir comprising:
providing an aqueous fluid;
adding nanoparticles and wetting agent to the aqueous fluid to form a nanoparticle treating solution;
pumping the treating solution down a well and into the reservoir;
pumping an acid solution down the well;
pumping the nanoparticle treating solution down the well; and
producing fluids from the well.

12. The method of claim 11 wherein the wetting agent is an alpha-olefin sulfonate.

13. The method of claim 11 wherein the alpha-olefin sulfonate has a carbon number in the range from about 10 to about 14.

14. The method of claim 11 wherein the nanoparticles are added to the nanoparticle treating solution to a concentration in the range from about 5% to about 15% by weight.

15. A method for hydraulic fracturing of a well comprising:
providing an aqueous fluid;
adding nanoparticles and wetting agent to the aqueous fluid to form a nanoparticle treating solution; and
pumping the nanoparticle treating solution into the well at a pressure greater than pressure required to hydraulically fracture the well.

16. The method of claim 15 wherein the nanoparticle treating solution is pumped into the well as a part of a pad fluid.

17. The method of claim 15 wherein the nanoparticle treating solution is pumped into the well after the proppant-laden stage and before producing the well.
